# EUROPEAN PATENT SPECIFICATION

(11) **EP 3 054 364 B1**
(45) Date of publication and mention of the grant of the patent: **20.11.2019**
(21) Application number: 15153662.0
(22) Date of filing: 03.02.2015
(51) Int. Cl.: G05D 23/02, G05D 23/13, F24D 19/10, F16K 11/044

(54) **An anti-condensating valve and a heating system using such an anti-condensating valve**
Kondensationsschutzventil und Heizungssystem mit solch einem Kondensationsschutzventil
Soupape anti-condensation et système de chauffage utilisant une telle soupape anti-condensation

(43) Date of publication of application: 10.08.2016
(73) Proprietor: LK Armatur AB, 254 66 Helsingborg (SE)
(72) Inventor: Carlin, Franco, 38057 Costasavina di Pergine (TN) (IT); Bencell, Laszlo, 265 38 Åstorp (SE); Ivarsson, Ulf, 282 94 Hörja (SE)
(74) Representative: AWA Sweden AB

(56) References cited:
- EP-A1- 1 967 935
- WO-A1-2012/052553
- AU-B2- 560 930

## Description

### FIELD OF THE INVENTION

The present invention relates to an anti-condensating valve and a heating system using such anti-condensating valve.

### BACKGROUND OF THE INVENTION

Heating systems comprising a boiler and a storage tank are commonly used today in order to provide heating and/or to provide hot tap water to e.g. a house. In order to safeguard so that high enough return temperature of the fluid, e.g. water, entering the boiler as well as optimal temperature stratification in the storage tank is achieved, an anti-condensating valve is commonly used. Such anti-condensating valve is arranged to control the temperature of the fluid returning to the boiler by adjusting the flow of fluid via a bypass conduit from the boiler directly back to the boiler again and the flow of fluid from the storage tank to the boiler. By mixing these two fluid flows, a high enough return temperature entering the boiler as well as optimal temperature stratification in the storage tank may be achieved. One example of such anti-condensating valve is known from EP1 967 935.

Another example of an anticondensate thermostatic valve is known from WO2012/052553A1.

It is a well known fact that prior art anti-condensating valves provide an insufficient accuracy and thereby a not always optimal regulation of the temperature of fluid leaving the mixing valve no matter if the temperature of the discharged intermixed fluid is measured directly downstream of the anti-condensating valve or in a position in the pipings even further downstream. This is due to a non-optimal intermixing of the incoming fluids having different temperatures.

The close handed solution would be to simply scale up the mixing chamber to thereby increase the retention time therein and thereby the mixing time and the available contact surface with the thermostatic cartridge. That is however less favorable since that would add to the bulkiness of the housing of the anti-condensating valve.

Further, it is a well known fact that thermostatic cartridges have a limited working life and needs to be periodically replaced. Accordingly, it is essential that there is remained an easy access to the thermostatic cartridge.

### SUMMARY OF THE INVENTION

It is an object of the present invention to provide an anti-condensating valve overcoming the above problems.

Especially, the anti-condensating valve should allow for an improved intermixing of the hot and cold fluids before reaching the thermostatic cartridge to allow an accurate and stable regulation.

This should apply regardless of temperatures, flows and pressures of the fluids supplied to the mixing chamber.

According to a first aspect of the invention, these and other objects are achieved by an anti-condensating valve comprising a housing having a first inlet, a second inlet and an outlet forming ports of a mixing chamber, the first inlet being adapted to receive a flow of a first fluid into the mixing chamber, and the second inlet being adapted to receive a flow of a second fluid into the mixing chamber, the first fluid having a higher temperature than the second fluid, and the outlet being adapted to discharge a flow of a mixed fluid out from the mixing chamber, wherein the centre axis of the first inlet is coaxial with the centre axis of the second inlet, and wherein the anti-condensating valve further comprises a valve body with a thermostatic cartridge, the valve body being arranged to control the flow of the first and the second fluids into the mixing chamber. The anti-condensating valve is characterized in that the inner walls of the mixing chamber, as seen in a plane orthogonally to the centre axes of the first and the second inlets and coinciding with the center axis of the outlet, defines a full cross sectional surface area along said plane, wherein the center axes of the first and second inlets respectively are arranged in a position between the outlet and the centre of mass of said full cross sectional surface area.

The inventors have noted that one key-factor to an accurate temperature regulation is that the thermostatic cartridge is subjected to a mixed fluid flow having a temperature corresponding to the set value of the temperature of the mixed fluid to be delivered as seen in a position downstream of the anti-condensating valve. There is no requirement that an absolute intermixing of the full amount of the fluids supplied to the mixing chamber should occur inside the mixing chamber since there will be ample time for such intermixing to occur in the piping downstream the anti-condensating valve. However, for a correct regulation and hence operation of the anti-condensating valve as such, it has been noted that at least the portion of the two fluids in the mixing chamber passing the thermo sensitive bulb of the thermostatic valve on its way to the outlet should be sufficiently intermixed when passing the bulb. Although that specific portion may represent a portion of the full amount of fluid leaving the mixing chamber, the temperature of that specific portion will represent the temperature of the resulting completely intermixed fluids as seen in a position downstream the anti-condensating valve.

The inventors have discovered that a displacement of the coinciding centre axes of the first and second inlets in view of the centre of mass of the full cross sectional surface area results in a more accurate temperature regulation. By the displacement, a free cross sectional surface area of the mixing chamber, as seen in the plane orthogonally to the centre axes of the first and the second inlets and coinciding with the center axis of the outlet, will be displaced away from the outlet. By "free cross sectional surface area" in the context of the invention is meant the cross sectional surface area, as seen in said plane, defined between the inner walls of the mixing chamber and the cross sectional area of the valve body. Since the mixing chamber as such has a volume, the free cross sectional surface area will form part of a free volume of the mixing chamber, which free volume will be arranged with its centre of mass in a position opposite the outlet and displaced in view of the coaxial center axes of the first and second inlets. By "free volume" in the context of the invention is meant the volume of the mixing chamber defined between the inner walls of the mixing chamber and the volume of the valve body. A plane coinciding with the centre axes of the first and second inlets and orthogonally to the centre axis of the outlet will virtually divide the free volume of the mixing chamber into a "primary mixing volume" and a "secondary mixing volume" with the secondary mixing chamber being arranged next to the outlet.

Flow simulations have indicated that the displacement results in an enhanced turbulence and a longer available flow path and also a longer retention time in the primary mixing volume. This results in an improved intermixing of the two fluids as measured in a position adjacent the bulb of the thermostatic cartridge.

It is indeed a fact that a portion of the first and second fluids that are let into the mixing chamber will leave the same with no or insufficient intermixing, however this of less relevance since a complete intermixing inevitable will occur in the piping downstream the anti-condensating valve. It is however important that the thermo sensitive bulb of the thermostatic cartridge is subjected to a sufficiently intermixed flow, although that flow as such only may represent a portion of the complete flow leaving the mixing chamber via the outlet.

The improved intermixing provided for by the present invention allows an extended working life of the thermostatic cartridge.

This implies an important difference over prior art solutions in which the center axes of the inlets are coinciding with the centre axis or centre of mass of the mixing chamber and hence also with the longitudinal centre axis of the valve body which is arranged to operate axially in the mixing chamber between the opposing inlets. In the prior art solutions, the free volume of the mixing chamber will accordingly be more or less coaxial to the valve body and the longitudinal centre axes of the inlets. It has been noted and it is a well established fact that the intermixing of the two incoming fluids in prior art solutions is not always optimal.

The inner walls of the mixing chamber together with the part of the valve body which is contained in the mixing chamber together define an available mixing volume of the mixing chamber, said available mixing volume being virtually divided into a primary mixing volume and a secondary mixing volume by a geometrical plane coinciding with the centre axes of the first and second inlets and extending orthogonally to the center axis of the outlet, the secondary mixing volume being arranged next to the outlet, and the secondary mixing volume having a volume being substantially smaller than the volume of the primary mixing volume.

The volume of the primary mixing volume may exceed the volume of the secondary mixing volume with 30% - 500% and more prefered 40 - 80%. The skilled person will realize that the displacement produces an increase of the primary mixing volume and, at the same time, a reduction of the secondary mixing volume. A small increase of the displacement may therefore produce a significant increase of the ratio between the primary and the secondary mixing volume. Consequently, this ratio ranges in a quite wide span even if the displacement as such is limited to relatively small values such as a couple of millimeters. Also, it will be clear to the skilled person that the volume of the primary mixing volume additionally may be influence by the overall geometry of the inner walls delimiting the mixing chamber.

The distance between the centre axes of the first and second inlets respectively and the centre of mass of the first cross sectional surface area may be in the range 2 - 20 mm.

The inner walls of the mixing chamber or the valve body may be provided with turbulators, whereby the intermixing of the two fluids may be enhanced. The turbulators may by way of example be formed as projections on the inner walls of the mixing chamber or on the valve body.

The valve body may be arranged in a position such that the full envelope surface of a thermally sensitive bulb of the thermostatic cartridge is positioned in the flow of mixed fluid. The chances that the thermally sensitive bulb will be subjected to a flow of sufficiently intermixed fluid will thereby be enhanced.

The valve body may comprise a plug element and an obturator, the plug element being adapted to lockingly engage the inner walls of the first inlet by threading, and the obturator being adapted to be arranged in the mixing chamber coaxially aligned with the centre axes of the first and the second inlets of the housing while being positioned in the flow of mixed fluid, and whereby the obturator is movable in the axial direction in view of the plug element in reply to thermal movements of a thermostatic cartridge received between the housing and the obturator.

The obturator may comprise a disc and a ring interconnected by longitudinally extending legs defining between them a central channel with openings between the legs, said central channel being adapted to receive the thermally sensitive bulb of the thermostatic cartridge.

The disc of the obturator may be provided with a circumferential protuberance adapted to interact by throttling with a valve seating formed in the second inlet of the mixing chamber, and the ring of the obturator may be provided with a circumferential, longitudinally extending wall portion provided with guides extending in the longitudinal direction of the valve body past the ring towards the plug element, whereby outer walls of said guides are adapted to slide against inner walls of a longitudinally extending envelope surface of the plug element while regulating the flow of the first fluid and the flow of the second fluid into the mixing chamber via the first inlet and the second inlet. Alternatively, the outer walls of said guides may be adapted to slide against walls forming an interface between the walls of the mixing chamber and the first inlet while regulating the flow of the first fluid and the flow of the second fluid into the mixing chamber via the first inlet and the second inlet.

According to another aspect, the invention relates to a heating system comprising a boiler, a storage tank and an anti-condensating valve with the features given above. The boiler may be a solid fuel boiler.

It is noted that the invention relates to all possible combinations of features recited in the claims.

### BRIEF DESCRIPTION OF THE DRAWINGS

These and other aspects of the present invention will now be described in more detail, with reference to the appended drawings showing embodiments of the invention.
Fig. 1 is a typical flow chart of a heating system with an integrated anti-condensating valve.
Fig. 2 illustrates a longitudinal cross section of the housing of an anti-condensating valve according to the present invention.
Fig. 3 illustrates a transverse cross section of the mixing chamber.
Fig. 4 illustrates a longitudinal cross section of the housing.
Fig. 5 illustrates a longitudinal cross section of the housing.
Fig. 6 illustrates details of the plug element forming part of the valve body.
Figs. 7a and 7b illustrate details of the obturator forming part of the valve body.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

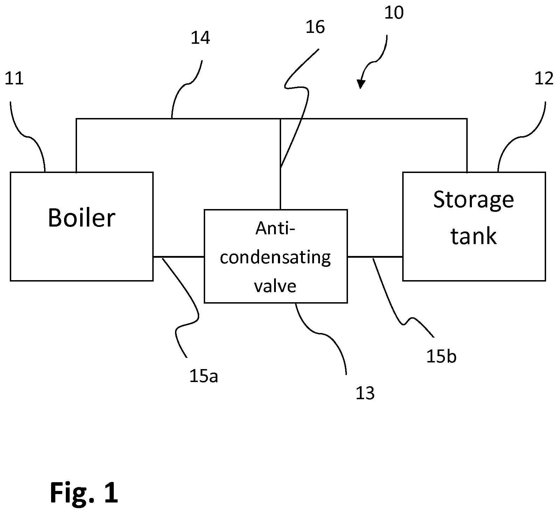

In Fig. 1 the overall design of a typical a heating system 10 with a storage tank is shown. The heating system 10 comprises a boiler 11, a storage tank 12 and an anti-condensating valve 13. The boiler 11 is connected to the anti-condensating valve 13 via the feeding conduit 15a; the storage tank 12 is connected to the anti-condensating valve 13 via a return conduit 15b. The heating system 10 also comprises a bypass conduit 16 arranged between the feeding conduit 14 and the anti-condensating valve 13.The boiler 11, e.g. being a solid fuel boiler, is arranged to heat a fluid, e.g. water. The storage tank 12 is arranged for storing the fluid (heated or not) for further use, e.g. heating a house or providing a hot tap water in a house. The function of such a boiler and storage tank is well known to the person skilled in the art and will not be described in more detail.

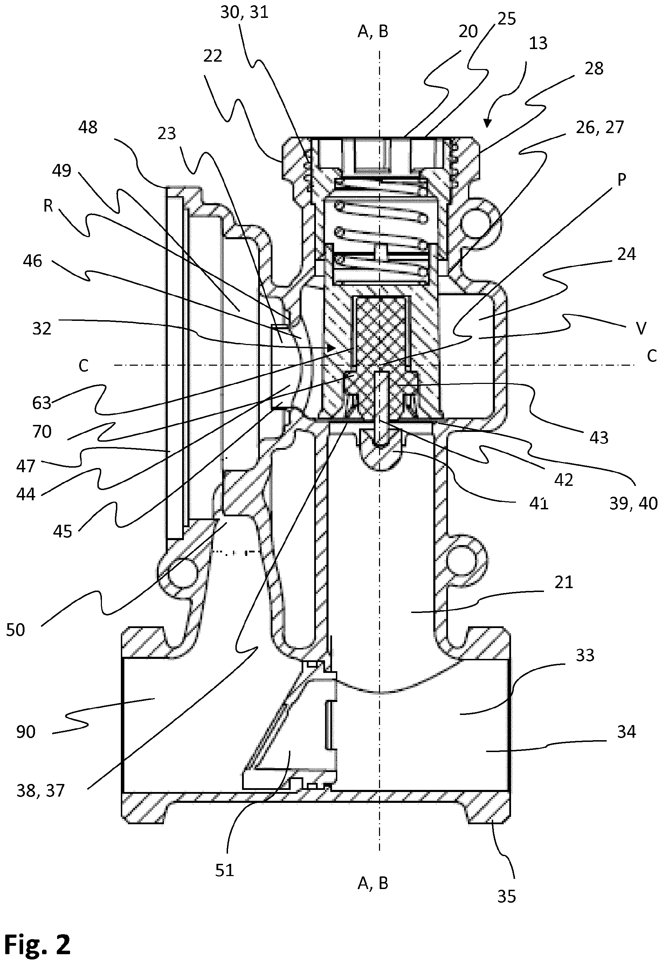

Now referring to Fig. 2 one embodiment of the inventive anti-condensating valve 13 will be disclosed. To facilitate the description, the anti-condensating valve 13 will during the following description be oriented with its two inlets 20, 21 extending in the vertical direction. It is however to be understood that other orientations are possible.

The anti-condensating valve 13 comprises a housing 22 having a first inlet 20, a second inlet 21 and an outlet 23, each forming ports 27, 38, 45 of a mixing chamber 24. The housing 22 as such may be formed as a casted body in one or several parts.

The first inlet 20 is formed as a longitudinal tube with a circular cross section. The first inlet 20 has a free first opening 25 intended to be connected to the bypass conduit 16 to thereby receive a flow of a first fluid from the boiler 11, and a second opening 26 forming a port 27 to the mixing chamber 24. The first opening 25 may along its outer envelope surface 28 be provided with threads (not disclosed) allowing connection of the anti-condensating valve 13 to the bypass conduit 16. Further, the first opening 25 has along its inner envelope surface 30 threads 31 allowing mounting of a valve body 32 to be discussed below.

The second inlet 21 is formed as a longitudinal tube with a circular cross section. The second inlet 21 has a free first opening 33 intended to be connected to the return conduit 15b to thereby receive a flow of a second fluid from the storage tank 12. During normal operation the first fluid typically has a higher temperature than the second fluid. In the disclosed embodiment the first opening 33 is integral with an essentially horizontal tube portion 34 allowing direct connection of the anti-condensating valve 13 to the return conduit 15b.

The first opening 33 may along its outer envelope surface 35 be provided with threads (not disclosed) allowing connection of the anti-condensating valve 13 to the return conduit 15b.

The second inlet 21 has a second opening 37 forming a port 38 to the mixing chamber 24. The interface 39 between the second inlet 21 and the mixing chamber 24 is constituted by a valve seating 40. The valve seating 40 is preferably machined to allow the valve body 32 to throttle the communication between the second inlet 21 and the mixing chamber 24.

The second inlet 21 has along an inner longitudinal wall portion a support 41. The support 41 is preferably integrated with the housing 22 and is intended to cooperate with the stem 42 of a thermostatic cartridge 43 to be discussed below.

The longitudinal centre axes A, B of the first and second inlets 20, 21 are preferably coaxially arranged.

The outlet 23 of the mixing chamber 24 comprises a first opening 44 forming a port 45 to the mixing chamber 24. The interface 46 between the first opening 44 and the mixing chamber 24 is provided with a radius R which may be omitted.

The second opening 47 of the outlet 23 is formed as a pump connection 48. The pump connection 48 comprises a compartment 49 adapted to receive an impeller (not disclosed) and a discharge channel 50 interconnecting the compartment 49 with the outlet 90. To prevent any unwanted back flow from the outlet 23 of the housing 22 to the second inlet 21, said horizontal tube portion 34 may comprise a check valve 51 or a plug.

The pump connection 48 and the horizontal tube portion 34 may be omitted or be provided as a separate unit to be mounted to the housing.

The outlet 23 has a longitudinal center axis C essentially coinciding with a center axis of the impeller (not disclosed) to be mounted thereto. Further, the longitudinal center axis C of the outlet 23 orthogonally intersects the centre axes A, B of the first and second inlets 20, 21. The point of intersection P is located in the mixing chamber 24.

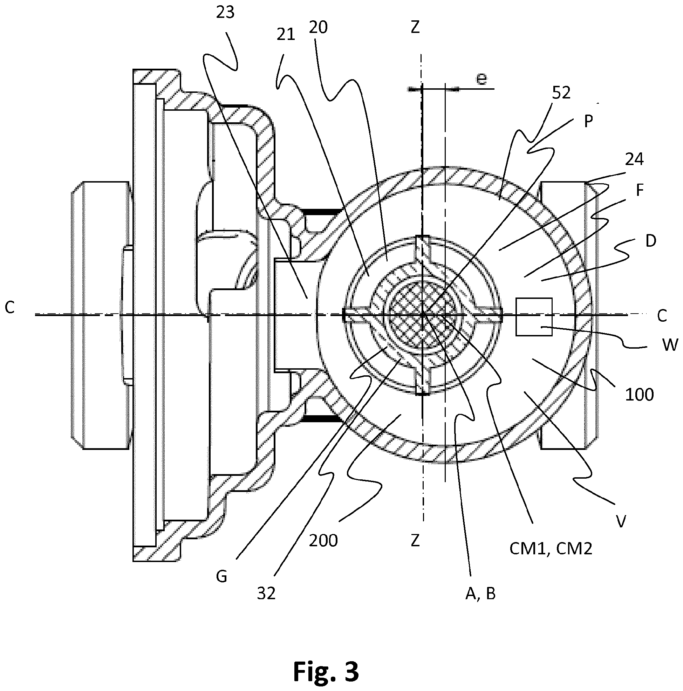

In the disclosed embodiment the mixing chamber 24 has an essentially straight cylindrical geometry with a circular cross section. The mixing chamber 24 has a longitudinal extension between the ports 27, 38 to the mixing chamber 24. Further, as is best seen in Fig. 3, the inner walls 52 of the mixing chamber 24, as seen in a plane W orthogonally to the centre axes A, B of the first and the second inlets 20, 21 and coinciding with the center axis C of the outlet 23, define a full cross sectional surface area D. The center axes A, B of the first and second inlets 20, 21 are arranged in a position between the outlet 23 and the centre of mass CM1 of the full cross sectional surface area D. Accordingly, the coinciding centre axes A, B of the first and second inlets 20, 21 are displaced in view of the centre of mass CM1 of the full cross sectional surface area D. The displacement is illustrated as a distance "e".

By the displacement e, a free cross sectional surface area F of the mixing chamber 24, as seen in the plane orthogonally to the centre axes A, B of the first and the second inlets 20, 21 and coinciding with the center axis C of the outlet 23, will be displaced away from the outlet 23. By "free cross sectional surface area" F in the context of the invention is meant the cross sectional surface area, as seen in said plane, defined between the inner walls 52 of the mixing chamber 24 and the cross sectional area G of the valve body 32 . The displacement "e" may be in the range of 2 - 20 mm.

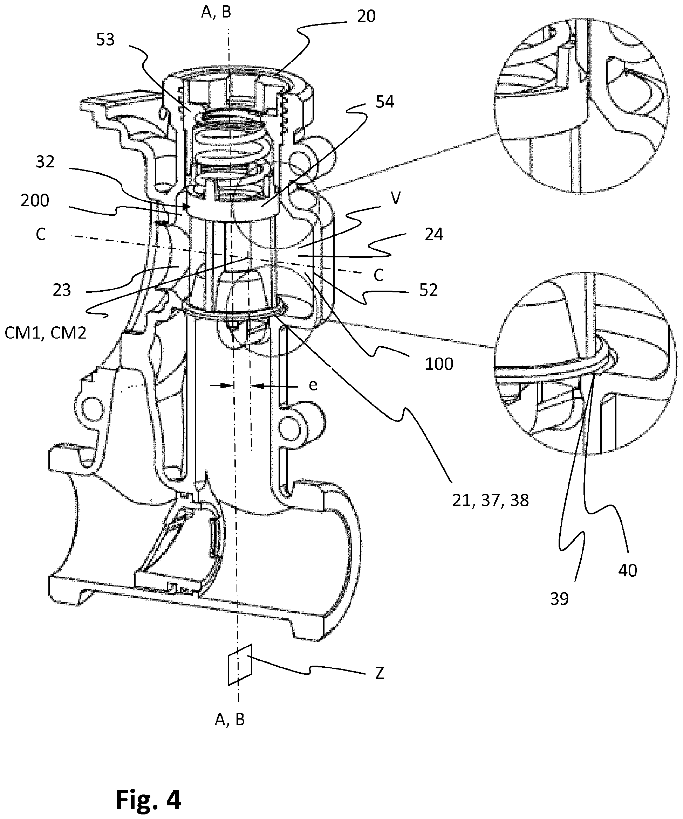

Since the mixing chamber 24 as such has a volume, see Fig. 4, the free cross sectional surface area F will form part of a free volume V of the mixing chamber 24, which free volume V will be arranged with its centre of mass CM2 in a position opposite the outlet 23 and displaced in view of the coaxial center axes A, B of the first and second inlets 20, 21. By "free volume" V in the context of the invention is meant the volume of the mixing chamber 24 defined between the inner walls 52 of the mixing chamber 24 and the volume of the part of the valve body 32 that is contained inside the mixing chamber 24.

It is to be understood that the centre of mass CM1 of the full cross sectional surface area D must not necessarily coincide with the centre of mass CM2 of the free volume V.

The plane Z coinciding with the centre axes A, B of the first and second inlets 20, 21 and orthogonally to the centre axis C of the outlet 23 will virtually divide the free volume V of the mixing chamber 24 into a "primary mixing volume" 100 and a "secondary mixing volume" 200 with the secondary mixing volume 200 arranged next to the outlet 23. The primary mixing volume 100 is essentially larger than the secondary mixing volume 200. The volume of the primary mixing volume 100 may by way of example exceed the volume of the secondary mixing volume 200 by 30%-500% and more prefered 40-80%. By way of example, with a remained inner wall geometry and in a given construction, a difference of 20% may be made possible by a displacement "e" in the range of 2 mm .

It goes without saying that the mixing chamber 24 may have other geometries than a straight circular cylinder. The cross section as seen along the centre axis C of the outlet 23 may by way of example be oval, octagonal or hexagonal. Especially, the inner walls 52 of the mixing chamber 24 contributing to the definition of the primary mixing volume 100 may be non circular and have another longitudinal extension than a straight extension.

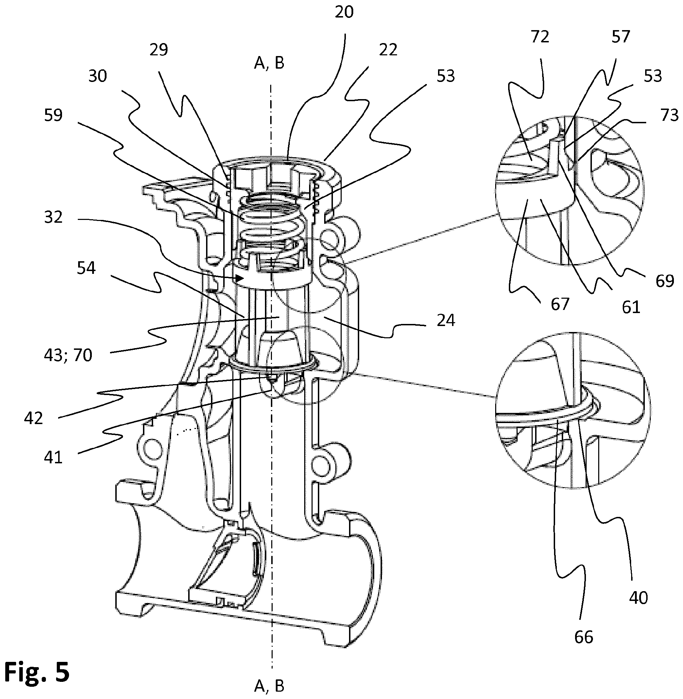

Now turning to Figs. 5, 6, 7a and 7b, the valve body 32 comprises a plug element 53 and an obturator 54. The plug element 53 and the obturator 54 may each be formed as a unitary body by way of example injection molding.

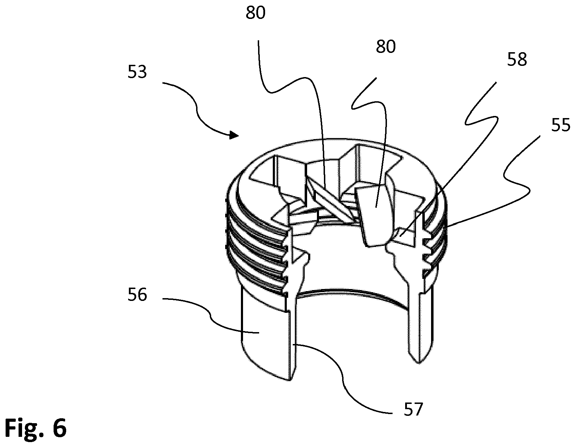

The plug element 53, disclosed in Figs. 5 and 6 is formed with external threads 55 along its upper external surface and is adapted to be threaded to the threads 29 of the inner surface 30 of the first inlet 20 and thereby to extend coaxially with the center axis A of the first inlet 20. Further, the plug element 53 has a downwardly directed, longitudinally extending envelope surface 56. The inner wall 57 of the envelope surface 56 is essentially smooth and may be adapted to act as a guiding surface when interacting with the obturator 54 to be described below.

The plug element 53 comprises a radially extending seating 58 adapted to receive and interact with a spring 59. In the disclosed embodiment the spring 59 is a compression spring.

The inner walls 52 of the mixing chamber 24 or the valve body 32 may be provided with turbulators. In Fig. 6 one example is disclosed where the plug element 53 is provided with turbulators 80 around its inlet opening.

The plug element 53 is adapted to cooperate with the obturator 54 which is adapted to slide coaxially with the plug element 53.

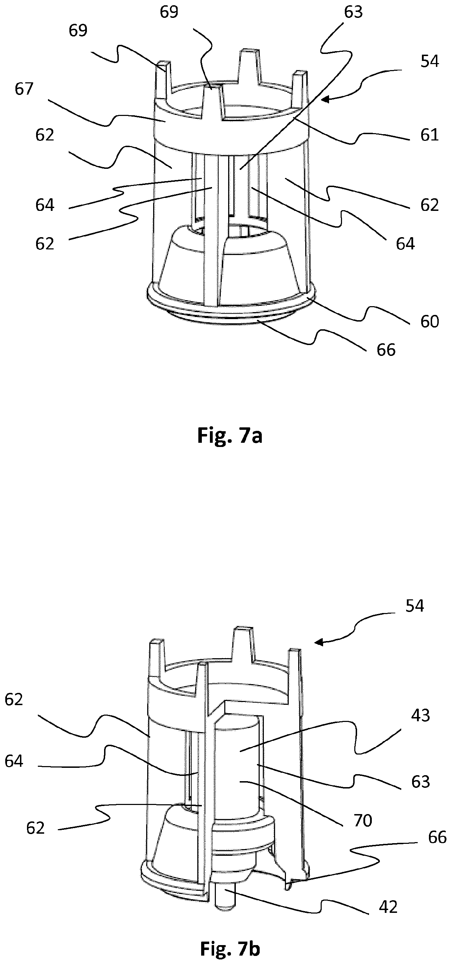

The obturator 54, disclosed in Fig. 5 and 7a and 7b comprises a longitudinal body having a disc 60 and a ring 61 which are interconnected by four legs 62. The legs 62 have a radial extension defining between them a central channel 63 with openings 64 between the legs 62. The legs may have other extensions than a radial. Also, the number of legs may be different. Further, the disc 60 is provided with a peripheral protuberance 66. The protuberance 66 is adapted to interact by throttling against the valve seating 40.

The ring 61 is provided with a circumferential, longitudinally extending wall portion 67. The wall portion 67 is provided with four guides 69 extending in the longitudinal direction of the obturator 54 past the ring 61 in a direction towards the plug element 53. The outer walls of the guides 69 and the longitudinally extending wall portion 67 are adapted to slide against the inner walls 57 of the plug element 53.

The thermostatic cartridge 43, best seen in Figs. 2 and 7b, is adapted to be arranged in the central channel 63 of the obturator 54. The thermostatic cartridge 43, well known in the art, has a longitudinal extension with a stem 42 and a thermally sensitive bulb 70. The free end of the stem 42 is arranged to rest against the support 41 formed in the wall portion of the second inlet 21 of the mixing chamber 24. The thermally sensitive bulb 70 is arranged to be received in the central channel 63 of the obturator 54 with its envelope surface exposed through the openings 64 formed between the legs 62. This is best to be seen in Fig. 7b.

When mounted to the housing 22, see Fig. 5, the obturator 54 with the thermostatic cartridge 43 is inserted into the mixing chamber 24 so that the protuberance 66 of the obturator 54 throttles against the valve seat 40. Further, the free end of the stem 42 of the thermostatic cartridge 43 rests against the support 41. The spring 59 is arranged coaxially on top of the ring 61 of the obturator 54. The plug element 53 is then threaded into the first inlet opening 20 of the housing 22 thereby compressing the spring 59. Accordingly, the thermostatic cartridge 43 is easy accessible when to be replaced. In this position, the guides 69 of the obturator 54 are adapted to be guided by the internal wall portions 57 of the plug element 53.

As a result of the guides 69 being circumferentially distributed, openings 72 will be formed between the guides 69, the ring 61 and a lower peripheral edge 73 of the plug element 53. The height, i.e. the longitudinal extension, of these radial openings 72 depends on the longitudinal displacement between the plug element 53 and the obturator 54 along the centre axis A. This effect will be discussed below when discussing the operation of the anti-condensating valve.

The spring 59 is chosen to have a spring constant adapted to apply a force to allow, during operation of the anti-condensating valve 13, a longitudinal movement of the obturator 54 in view of the plug element 53. The longitudinal movement will be the result of the thermally sensitive bulb 70 being subjected to hot water, i.e. the first fluid, supplied to the mixing chamber 24 via the first inlet 20. The hot water is allowed into the mixing chamber 24 via the radial openings 72. At the very same time, the protuberance 66 of the disc 60 of the obturator 54 is throttling against the valve seat 40 of the second inlet 21 to the mixing chamber 24. Thereby no cold fluid, i.e. no second fluid, is initially allowed to enter the mixing chamber 24.

As the bulb 70 is subjected to the hot fluid, the stem 42 will due to the design and the inherent function of the thermostatic cartridge 43 be forced to move in the longitudinal direction and hence act against the support 41. Thereby the obturator 54 will be forced towards the plug element 53 while the guides 69 will be guided by the internal wall portions 67 of the plug element 53. During this movement the longitudinal height of the radial openings 72 will be reduced, thereby restricting the supply of the first fluid, i.e. hot water to the mixing chamber 24. This longitudinal movement of the obturator 54 in view of the plug element 53 will go on continuously to thereby balance the supply of hot and cold fluid into the mixing chamber 24 to provide a discharge of properly tempered fluid via the outlet 23.

As discussed above, the mixing chamber 24 has a free volume V which may be divided by the plane Z into a primary mixing volume 100 and a secondary mixing volume 200. The primary mixing volume is essentially larger than the secondary mixing volume due to the displacement "e" of the centre of mass CM1, CM2 in view of the longitudinal center axes A, B of the first and second inlets 20, 21. This causes an asymmetry of the mixing chamber 24. The flow in the primary mixing volume 100 will due to its larger volume which also provides a longer flow path be more or less turbulent, resulting in a good intermixing of the first and second fluids. On its way towards the outlet 23 where it will be discharged, the fluid from of the primary mixing volume 100 will pass the bulb 70 of the thermostatic cartridge 43. Due to its position in the obturator 54 inside the mixing chamber 24, the bulb 70 will along essentially its full envelope surface be immersed in the fluid contained in the mixing chamber. Thereby the bulb 70 will be subjected to a sufficiently intermixed fluid flow. Since the bulb 70 acts as a thermal sensor which in turn affects the movement of the valve body 32, the regulating effect of the flow of first and second fluids into the mixing chamber 24 will be more accurate.

The person skilled in the art realizes that the present invention by no means is limited to the preferred embodiments described above. On the contrary, many modifications and variations are possible within the scope of the appended claims. For example the inner walls 52 of the mixing chamber 24 must not be circular. Other cross sections, such as rectangular, oval, octagonal, hexagonal or the like may be possible.

The first and second inlets 20, 21 may have other cross sections than circular.

The horizontal tube portion 34 may be omitted whereby the housing 22 instead is arranged to be connected to the feeding conduit 15a and to the return conduit 15b by separate couplings such as elbows or T-joints.

The plug element 53 may be arranged by other means than threading.

In the disclosed embodiment the valve body has a longitudinal extension coinciding with the longitudinal centre axes of the first and second inlets. It is to be understood that the valve body may arranged with an angle to the longitudinal centre axes of the first and second inlets.

In an alternative embodiment of the valve body, the outer walls of the guides of the obturator may be adapted to slide against walls forming the interface between the walls of the mixing chamber and the first inlet while regulating the flow of the first fluid and the flow of the second fluid into the mixing chamber via the first inlet and the second inlet.

Variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. Anti-condensating valve (13) comprising a housing (22) having a first inlet (20), a second inlet (21) and an outlet (23) forming ports (27, 38, 45) of a mixing chamber (24), the first inlet (20) being adapted to receive a flow of a first fluid into the mixing chamber (24), and the second inlet (21) being adapted to receive a flow of a second fluid into the mixing chamber (24), the first fluid having a higher temperature than the second fluid, and the outlet (23) being adapted to discharge a flow of a mixed fluid out from the mixing chamber (24),
wherein the centre axis (A) of the first inlet (20) is coaxial with the centre axis (B) of the second inlet (21), and
wherein the anti-condensating valve (13) further comprises a valve body (32) with a thermostatic cartridge (43), the valve body (32) being arranged to control the flow of the first and the second fluid into the mixing chamber (24), **characterized in that**
the inner walls (52) of the mixing chamber (24), as seen in a plane (W) orthogonally to the centre axes (A, B) of the first and the second inlets (20, 21) and coinciding with the center axis (C) of the outlet (23), define a full cross sectional surface area (D) along said plane (W), wherein the center axes (A, B) of the first and second inlets (20, 21) respectively are arranged in a position between the outlet (23) and the centre of mass (CM1) of said full cross sectional surface area (D).

2. Anti-condensating valve according to claim 1, wherein the inner walls (52) of the mixing chamber (24) together with the part of the valve body (32) which is contained in the mixing chamber (24) together define an available mixing volume of the mixing chamber (24), said available mixing volume being virtually divided into a primary mixing volume (100) and a secondary mixing volume (200) by a plane (Z) coinciding with the centre axes (A, B) of the first and second inlets (20, 21) and extending orthogonally to the center axis (C) of the outlet (23), the secondary mixing volume (200) being arranged next to the outlet (23), and the secondary mixing volume (200) being substantially smaller than the primary mixing volume (100).

3. Anti-condensating valve according to claim 2, wherein the volume of the primary mixing volume (100) exceeds the volume of the secondary mixing volume (200) by 30%-500% and more prefered 40-80%.

4. Anti-condensating valve according to any of the preceding claims, wherein the distance (e) between the centre axes (A, B) of the first and second inlets (20, 21) respectively and the centre of mass of the first cross sectional area (CM1) is in the range 2 - 20 mm.

5. Anti-condensating valve according to any of the previous claims, wherein the inner walls (52) of the mixing chamber (24) or the valve body (32) are provided with turbulators (80).

6. Anti-condensating valve according to any of the previous claims, wherein the valve body (32) is arranged in a position such that the full envelope surface of a thermally sensitive bulb (70) of the thermostatic cartridge (43) is positioned in the flow of mixed fluid.

7. Anti-condensating valve according to any of the previous claims, wherein the valve body (32) comprises a plug element (53) and an obturator (54),
the plug element (53) being adapted to engage the inner walls of the first inlet (20), and
the obturator (54) being adapted to be arranged in the mixing chamber (24) coaxially aligned with the centre axes (A, B) of the first and the second inlets (20, 21) of the housing (22) while being positioned in the flow of intermixed fluid, and
whereby the obturator (54) is movable in the axial direction in view of the plug element (53) in reply to thermal movements of a thermostatic cartridge (43) received between the housing (22) and the obturator (54).

8. Anti-condensating valve according to claim 7, wherein the obturator (54) comprises a disc (60) and a ring (61) interconnected by longitudinally extending legs (62) defining between them a central channel (63) with openings (64) between the legs (62), said central channel (63) being adapted to receive the thermally sensitive bulb (70) of the thermostatic cartridge (43).

9. Anti-condensating valve according to claim 8, wherein the disc (60) of the obturator (54) is provided with a circumferential protuberance (66) adapted to interact by throttling with a valve seating (40) formed in the second inlet (21) of the mixing chamber (24), and
wherein the ring (61) of the obturator (54) is provided with a circumferential, longitudinally extending wall portion (67) provided with guides (69) extending in the longitudinal direction of the valve body (32) past the ring (61) towards the plug element (53),
whereby outer walls of said guides (69) are adapted to slide against inner walls (57) of a longitudinally extending envelope surface (56) of the plug element (53) while regulating the flow of the first fluid and the flow of the second fluid into the mixing chamber (24) via the first inlet (20) and the second inlet (21).

10. Anti-condensating valve according to claim 8, wherein the disc (60) of the obturator (54) is provided with a circumferential protuberance (66) adapted to interact by throttling with a valve seating (40) formed in the second inlet (21) of the mixing chamber (24), and
wherein the ring (61) of the obturator (54) is provided with a circumferential, longitudinally extending wall portion (67) provided with guides (69) extending in the longitudinal direction of the valve body (32) past the ring (61) towards the plug element (53),
whereby outer walls of said guides (69) are adapted to slide against walls forming an interface between the walls of the mixing chamber (23) and the first inlet (20) while regulating the flow of the first fluid and the flow of the second fluid into the mixing chamber (24) via the first inlet (20) and the second inlet (21).

11. A heating system comprising a boiler (11), a storage tank (12) and an anti-condensating valve (13) according to any one of claims 1-10.

12. The heating system according to claim 11, wherein the boiler (11) is a solid fuel boiler.

## Patentansprüche

1. Kondensationsschutzventil (13), das ein Gehäuse (22) mit einem ersten Einlass (20), einem zweiten Einlass (21) und einem Auslass (23) umfasst, die Öffnungen (27, 38, 45) einer Mischkammer (24) bilden, wobei der erste Einlass (20) ausgebildet ist, um einen Fluss eines ersten Fluids in die Mischkammer (24) aufzunehmen, und der zweite Einlass (21) ausgebildet ist, um einen Fluss eines zweiten Fluids in die Mischkammer (24) aufzunehmen, wobei das erste Fluid eine höhere Temperatur als das zweite Fluid aufweist und der Auslass (23) ausgebildet ist, um einen Fluss eines gemischten Fluids aus der Mischkammer (24) abzulassen,
wobei die Mittelachse (A) des ersten Einlasses (20) koaxial zur Mittelachse (B) des zweiten Einlasses (21) ist, und
wobei das Kondensationsschutzventil (13) ferner einen Ventilkörper (32) mit einer thermostatischen Kartusche (43) umfasst, wobei der Ventilkörper (32) angeordnet ist, um den Durchfluss des ersten und des zweiten Fluids in die Mischkammer (24) zu steuern, **dadurch gekennzeichnet, dass**
die Innenwände (52) der Mischkammer (24), wie sie in einer Ebene (W) senkrecht zu den Mittelachsen (A, B) des ersten und des zweiten Einlasses (20, 21) und mit der Mittelachse (C) des Auslasses (23) zusammenfallend zu sehen sind, eine gesamte Querschnittfläche (D) entlang der Ebene (W) definieren, wobei die Mittelachsen (A, B) des ersten und des zweiten Einlasses (20, 21) jeweils in einer Position zwischen dem Auslass (23) und dem Schwerpunkt (CM1) der gesamten Querschnittfläche (D) angeordnet sind.

2. Kondensationsschutzventil nach Anspruch 1, wobei die Innenwände (52) der Mischkammer (24) zusammen mit dem Teil des Ventilkörpers (32), die in der Mischkammer (24) enthalten sind, zusammen einen verfügbaren Mischraum der Mischkammer (24) definieren, wobei der verfügbare Mischraum praktisch in einen primären Mischraum (100) und einen sekundären Mischraum (200) durch eine Ebene (Z) aufgeteilt ist, die mit den Mittelachsen (A, B) des ersten und des zweiten Einlasses (20, 21) zusammenfällt und sich senkrecht zur Mittelachse (C) des Auslasses (23) erstreckt, wobei der sekundäre Mischraum (200) neben dem Auslass (23) angeordnet ist, und der sekundäre Mischraum (200) wesentlich kleiner als der primäre Mischraum (100) ist.

3. Kondensationsschutzventil nach Anspruch 2, wobei der Raum des primären Mischraums (100), den Raum des sekundären Mischraums (200) um 30 %-500 % und mehr bevorzugt um 40-80 % übersteigt.

4. Kondensationsschutzventil nach einem der vorhergehenden Ansprüche, wobei der Abstand (e) zwischen den Mittelachsen (A, B) der jeweils ersten und zweiten Einlässe (20, 21) und dem Schwerpunkt der ersten Querschnittfläche (CM1) im Bereich von 2-20 mm liegt.

5. Kondensationsschutzventil nach einem der vorhergehenden Ansprüche, wobei die Innenwände (52) der Mischkammer (24) oder des Ventilkörpers (32) mit Turbulatoren (80) versehen sind.

6. Kondensationsschutzventil nach einem der vorhergehenden Ansprüche, wobei der Ventilkörper (32) in einer Position derart angeordnet ist, dass die volle Mantelfläche eines thermisch empfindlichen Kolben (70) der thermostatischen Kartusche (43) im Durchfluss des gemischten Fluids positioniert ist.

7. Kondensationsschutzventil nach einem der vorhergehenden Ansprüche, wobei der Ventilkörper (32) ein Stopfenelement (53) und einen Obturator (54) umfasst,
wobei das Stopfenelement (53) ausgebildet ist, um in die Innenwände des ersten Einlasses (20) einzugreifen, und
der Obturator (54) ausgebildet ist, um in der Mischkammer (24) in koaxialer Ausrichtung mit den Mittelachsen (A, B) des ersten und des zweiten Einlasses (20, 21) des Gehäuses (22) angeordnet zu sein, während er im Durchfluss des vermischten Fluids positioniert ist, und
wobei der Obturator (54) in axialer Richtung im Hinblick auf das Stopfenelement (53) als Antwort auf thermische Bewegungen einer thermostatischen Kartusche (43), die zwischen dem Gehäuse (22) und dem Obturator (54) aufgenommen ist, beweglich ist.

8. Kondensationsschutzventil nach Anspruch 7, wobei der Obturator (54) eine Scheibe (60) und einen Ring (61) umfasst, die mit Schenkeln (62), die sich in Längsrichtung erstrecken, miteinander verbunden sind, die zwischen ihnen einen zentralen Kanal (63) mit Öffnungen (64) zwischen den Schenkeln (62) definieren, wobei der zentrale Kanal (63) dazu ausgelegt ist, den wärmeempfindlichen Kolben (70) der thermostatischen Kartusche (43) aufzunehmen.

9. Kondensationsschutzventil nach Anspruch 8, wobei die Scheibe (60) des Obturators (54) mit einem umlaufenden Vorsprung (66) versehen ist, die ausgelegt ist, um durch Drosselung mit einem Ventilsitz (40) zusammenzuwirken, der im zweiten Einlass (21) der Mischkammer (24) gebildet ist, und
wobei der Ring (61) des Obturators (54) mit einem umlaufenden, sich längs erstreckendem Wandabschnitt (67) mit Führungen (69) versehen ist, die sich in Längsrichtung des Ventilkörpers (32) am Ring (61) vorbei zum Stopfenelement (53) erstrecken,
wobei Außenwände der Führungen (69) gegen die Innenwände ausgelegt sind, um gegen Innenwände (57) einer sich in Längsrichtung erstreckenden Mantelfläche (56) des Stopfenelements (53) zu gleiten, während sie den Durchfluss des ersten Fluids und den Durchfluss des zweiten Fluids in die Mischkammer (24) über den ersten Einlass (20) und den zweiten Einlass (21) regulieren.

10. Kondensationsschutzventil nach Anspruch 8, wobei die Scheibe (60) des Obturators (54) mit einem umlaufenden Vorsprung (66) versehen ist, die ausgelegt ist, um durch Drosselung mit einem Ventilsitz (40) zusammenzuwirken, der im zweiten Einlass (21) der Mischkammer (24) gebildet ist, und
wobei der Ring (61) des Obturators (54) mit einem umlaufenden, sich längs erstreckendem Wandabschnitt (67) mit Führungen (69) versehen ist, die sich in Längsrichtung des Ventilkörpers (32) am Ring (61) vorbei zum Stopfenelement (53) erstrecken,
wobei Außenwände der Führungen (69) gegen die Innenwände ausgelegt sind, um gegen Wände zu gleiten, die eine Grenzfläche zwischen den Wänden der Mischkammer (23) und dem ersten Einlass (20) bilden, während sie den Durchfluss des ersten Fluids und den Durchfluss des zweiten Fluids in die Mischkammer (24) über den ersten Einlass (20) und den zweiten Einlass (21) regulieren.

11. Heizungssystem umfassend einen Kessel (11), einen Speichertank (12) und ein Kondensationsschutzventil (13) nach einem der Ansprüche 1-10.

12. Heizungssystem nach Anspruch 11, wobei der Kessel (11) ein Festbrennstoffkessel ist.

## Revendications

1. Soupape anti-condensation (13) comprenant un boîtier (22) ayant une première entrée (20), une deuxième entrée (21) et une sortie (23) formant des orifices (27, 38, 45) d'une chambre de mélange (24), la première entrée (20) étant adaptée pour recevoir un écoulement d'un premier fluide dans la chambre de mélange (24), et la deuxième entrée (21) étant adaptée pour recevoir un écoulement d'un deuxième fluide dans la chambre de mélange (24), le premier fluide ayant une température plus élevée que le deuxième fluide, et la sortie (23) étant adaptée pour décharger un écoulement d'un fluide mélangé hors de la chambre de mélange (24),
dans laquelle l'axe central (A) de la première entrée (20) est coaxial à l'axe central (B) de la deuxième entrée (21), et
dans laquelle la soupape anti-condensation (13) comprend en outre un corps de soupape (32) avec une cartouche thermostatique (43), le corps de soupape (32) étant étudié pour contrôler l'écoulement du premier et du deuxième fluide dans la chambre de mélange (24), **caractérisée en ce que**
les parois intérieures (52) de la chambre de mélange (24), en vue dans un plan (W) orthogonalement aux axes centraux (A, B) des première et deuxième entrées (20, 21) et coïncidant avec l'axe central (C) de la sortie (23), définissent une aire de surface de section transversale totale (D) le long dudit plan (W), dans laquelle les axes centraux (A, B) des première et deuxième entrées (20, 21) sont respectivement disposés dans une position entre la sortie (23) et le centre de masse (CM1) de ladite aire de surface de section transversale totale (D).

2. Soupape anti-condensation selon la revendication 1, dans laquelle les parois intérieures (52) de la chambre de mélange (24) ensemble avec la partie du corps de soupape (32) contenue dans la chambre de mélange (24) définissent ensemble un volume de mélange disponible de la chambre de mélange (24), ledit volume de mélange disponible étant virtuellement divisé en un volume de mélange principal (100) et un volume de mélange secondaire (200) par un plan (Z) coïncidant avec les axes centraux (A, B) des première et deuxième entrées (20, 21) et s'étendant orthogonalement à l'axe central (C) de la sortie (23), le volume de mélange secondaire (200) étant disposé près de la sortie (23), et le volume de mélange secondaire (200) étant sensiblement inférieur au volume de mélange principal (100).

3. Soupape anti-condensation selon la revendication 2, dans laquelle le volume du volume de mélange principal (100) dépasse le volume du volume de mélange secondaire (200) de l'ordre de 30 %-500 % et de manière davantage préférée, de 40-80 %.

4. Soupape anti-condensation selon l'une quelconque des revendications précédentes, dans laquelle la distance (e) entre les axes centraux (A, B) respectivement des première et deuxième entrées (20, 21) et le centre de masse de la première aire de section transversale (CM1) est dans la plage de 2-20 mm.

5. Soupape anti-condensation selon l'une quelconque des revendications précédentes, dans laquelle les parois intérieures (52) de la chambre de mélange (24) ou du corps de soupape (32) sont dotées de turbulateurs (80).

6. Soupape anti-condensation selon l'une quelconque des revendications précédentes, dans laquelle le corps de soupape (32) est disposé dans une position de sorte que la surface enveloppante totale d'une ampoule thermosensible (70) de la cartouche thermostatique (43) est positionnée dans l'écoulement du fluide mélangé.

7. Soupape anti-condensation selon l'une quelconque des revendications précédentes, dans laquelle le corps de soupape (32) comprend un élément de bouchon (53) et un obturateur (54),
l'élément de bouchon (53) étant adapté pour se mettre en prise avec les parois intérieures de la première entrée (20), et
l'obturateur (54) étant adapté pour être disposé dans la chambre de mélange (24) de manière coaxialement alignée avec les axes centraux (A, B) des première et deuxième entrées (20, 21) du boîtier (22) tout en étant positionné dans l'écoulement du fluide mélangé, et
moyennant quoi l'obturateur (54) est mobile dans la direction axiale en vue de l'élément de bouchon (53) en réponse à des mouvements thermiques d'une cartouche thermostatique (43) reçue entre le boîtier (22) et l'obturateur (54).

8. Soupape anti-condensation selon la revendication 7, dans laquelle l'obturateur (54) comprend un disque (60) et une bague (61) interconnectés par des jambes s'étendant longitudinalement (62), définissant entre eux un canal central (63) avec des ouvertures (64) entre les jambes (62), ledit canal central (63) étant adapté pour recevoir l'ampoule thermosensible (70) de la cartouche thermostatique (43).

9. Soupape anti-condensation selon la revendication 8, dans laquelle le disque (60) de l'obturateur (54) est doté d'une protubérance circonférentielle (66) adaptée pour interagir par étranglement avec un siège de soupape (40) formé dans la deuxième entrée (21) de la chambre de mélange (24), et
dans laquelle la bague (61) de l'obturateur (54) est dotée d'une partie de paroi (67) circonférentielle s'étendant longitudinalement dotée de guides (69) s'étendant dans la direction longitudinale du corps de soupape (32) au-delà de la bague (61) vers l'élément de bouchon (53),
moyennant quoi des parois extérieures desdits guides (69) sont adaptées pour glisser contre des parois intérieures (57) d'une surface enveloppante (56) s'étendant longitudinalement de l'élément de bouchon (53) tout en régulant l'écoulement du premier fluide et l'écoulement du deuxième fluide dans la chambre de mélange (24) via la première entrée (20) et la deuxième entrée (21).

10. Soupape anti-condensation selon la revendication 8, dans laquelle le disque (60) de l'obturateur (54) est doté d'une protubérance circonférentielle (66) adaptée pour interagir par étranglement avec un siège de soupape (40) formé dans la deuxième entrée (21) de la chambre de mélange (24), et
dans laquelle la bague (61) de l'obturateur (54) est dotée d'une partie de paroi circonférentielle s'étendant longitudinalement (67) dotée de guides (69) s'étendant dans la direction longitudinale du corps de soupape (32) au-delà de la bague (61) vers l'élément de bouchon (53),
moyennant quoi des parois extérieures desdits guides (69) sont adaptées pour glisser contre des parois formant une interface entre les parois de la chambre de mélange (23) et la première entrée (20) tout en régulant l'écoulement du premier fluide et l'écoulement du deuxième fluide dans la chambre de mélange (24) via la première entrée (20) et la deuxième entrée (21).

11. Système de chauffage comprenant une chaudière (11), un réservoir de stockage (12), et une soupape anti-condensation (13) selon l'une quelconque des revendications 1-10.

12. Système de chauffage selon la revendication 11, dans lequel la chaudière (11) est une chaudière à combustible solide.
